# EUROPEAN PATENT APPLICATION

(11) **EP 1 424 854 A1**
(43) Date of publication of application: **02.06.2004**
(21) Application number: 03017301.7
(22) Date of filing: 30.07.2003
(51) Int. Cl.: H04N 7/01, H04N 5/44, G11B 27/034, G11B 20/12

(54) **Video data conversion apparatus and video data conversion method**

(30) Priority: 29.11.2002 JP 2002347502
(71) Applicant: Kabushiki Kaisha Toshiba, Minato-ku, Tokyo 105 (JP)
(72) Inventor: Shibutani, Manabu, c/o Intell Prop. Division, Minato-ku, Tokyo 105-8001 (JP)
(74) Representative: Henkel, Feiler & Hänzel

(57) **Abstract**

A video data conversion method according to an aspect of this invention converts (S35, S38) video data which comprises with a predetermined standard and has nonuniform aspect ratios into video data having a uniform aspect ratio by rewriting data which is contained in the video data having nonuniform aspect ratios and designates aspect ratios.

## Description

The present invention relates to a video data conversion apparatus and video data conversion method for converting video data complying with MPEG.

Nowadays, a DVD-Video Recording standard (to be referred to as a DVD-VR standard hereinafter) is known as a format for recording video data on an optical disk or magnetic disk in real time. The DVD-VR standard adopts a format, which complies with MPEG (Moving Picture Expert Group = a predetermined standard) as the international standard that specifies the video data encoding format, and allows easy real-time video recording, and playback, editing, and the like of recorded data.

On the other hand, DVD-Video media that store video products such as movies and the like as read-only media adopt a DVD-Video standard as its recording format. The DVD-Video standard also complies with MPEG2 as in the DVD-VR standard, but has no structure allowing easy edit since it is a recording format for read-only media. That is, these two standards are not necessarily the same although they comply with MPEG.

For example, these two standards have a difference in their aspect ratio setups. For example, the DVD-VR standard can set different aspect ratios for relative small data units, but the DVD-Video standard does not permit such aspect ratio setups.

As is generally known, 4 : 3 and 16 : 9 are available as the aspect ratio of a digital video signal. For example, an up conversion technique for converting a digital video signal from the current format (i.e., CCIR 601 525 format, aspect ratio = 4 : 3, 720 x 486 pixels) to the high-definition format (i.e., SMPTE 240M format, aspect ratio = 16 : 9, 1,920 x 1,035 pixels) has been disclosed (Jpn. Pat. Appln. KOKAI Publication No. 5-137124).

As described above, since the DVD-VR and DVD-Video standards have a difference associated with aspect ratio setups, a problem is posed upon converting data from the DVD-VR standard into the DVD-Video standard. The conversion technique disclosed in the aforementioned reference does not assume data conversion from the DVD-VR standard into the DVD-Video standard, and cannot solve the problem.

The necessity of data conversion from the DVD-VR standard into the DVD-Video standard is strong for the following reason. In recent years, DVD-R disks, which are of write once type and are physically compatible to DVD-Video disks, have prevailed. When data is written on a DVD-R disk using the DVD-Video standard format, the DVD-R disk can be played back in an environment that allows playback of that DVD-Video. Hence, video data is recorded in the DVD-VR standard format suited to real-time recording, and undergoes an editing process and the like. After that, the processed video data is written on a DVD-R disk in the DVD-Video standard format. At this time, data conversion from the DVD-VR standard to the DVD-Video standard is done.

To attain such data conversion, a method of decoding and playing back data complying with the DVD-VR standard, then encoding the played-back data to data complying with the DVD-Video standard, and recording the encoded data on a DVD-R disk is known. However, with this method, since video and audio data are encoded again after they are decoded, the original video data is degraded.

It is an object of the present invention to provide a video data conversion apparatus and video data conversion method, which can convert original video data into target video data without degrading the quality of the original video data.

A video data conversion apparatus according to an aspect of the present invention comprises conversion unit configured to convert video data which complies with MPEG and has nonuniform aspect ratios into video data having a uniform aspect ratio by rewriting data which is contained in the video data having the nonuniform aspect ratios and designates aspect ratios, and output unit configured to output the video data converted by the conversion unit.

A video data conversion method according to an aspect of the present invention comprises converting video data which complies a predetermined standard MPEG and has nonuniform aspect ratios into video data having a uniform aspect ratio by rewriting data which is contained in the video data having the nonuniform aspect ratios and designates aspect ratios.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an example of the data structure of DVD-VR data complying with the DVD-VR standard;
FIG. 2 shows an example of the data structure of a VOBU in the DVD-VR standard;
FIG. 3 shows an example of the data structure of a VOBU in the DVD-Video standard;
FIG. 4 shows an example of the data structure of a sequence header which contains information associated with aspect ratios in display data;
FIG. 5 shows an example of the data structure of a sequence display extension which contains information associated with aspect ratios in display data;
FIG. 6 shows an example of the data structure of DVD-Video data complying with the DVD-Video standard;
FIG. 7 is a block diagram showing an example of the arrangement of an optical disk recording/playback/edit apparatus which can implement a format conversion process and editing process;
FIG. 8 is a flowchart for explaining an example of a pre-process required upon converting data complying with the DVD-VR standard into that complying with the DVD-Video standard;
FIG. 9 is a flowchart for explaining an example of a conversion process for converting data complying with the DVD-VR standard into that complying with the DVD-Video standard;
FIG. 10 is a flowchart for explaining an example of a VOBS conversion process for converting a VOBS complying with the DVD-VR standard into that complying with the DVD-Video standard;
FIG. 11 is a flowchart showing an example of conversion associated with aspect ratio in a VOBU conversion process; and
FIG. 12 is a flowchart for explaining an example of a process for converting recorded video data into data with an appropriate aspect ratio when broadcast contents in which an aspect ratio is switched in the middle are recorded.

Preferred embodiments of the present invention will be described hereinafter with reference to the accompanying drawings.

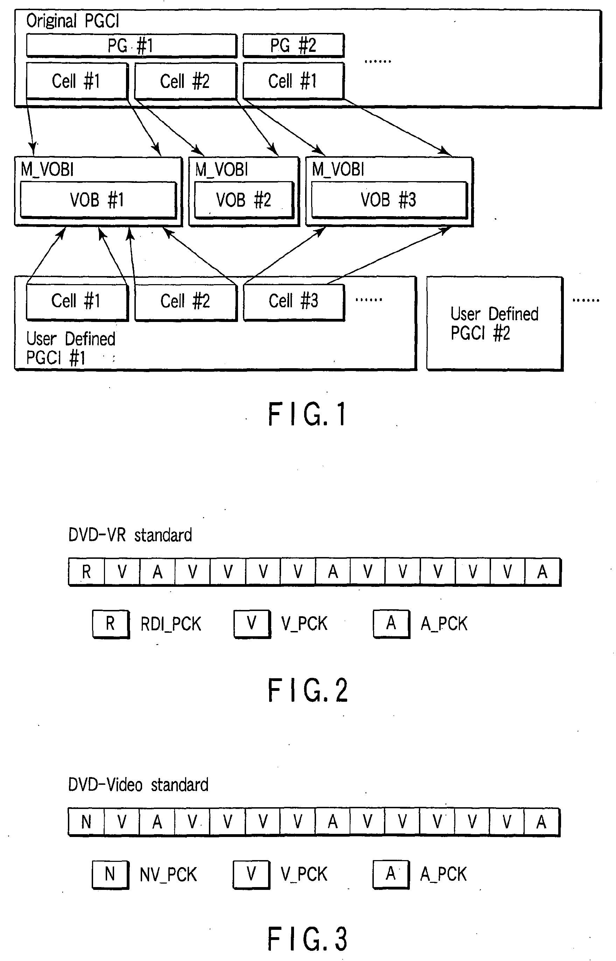

The data structure of DVD-VR data complying with the DVD-VR standard, and aspect ratio information in that structure will be explained first. FIG. 1 shows the data structure of DVD-VR data complying with the DVD-VR standard. As shown in FIG. 1, DVD-VR data complying with the DVD-VR standard contains a plurality of VOBs (Video Objects) formed by encoding audio and video data, and a plurality of pieces of M_VOBI (Movie AV File Information) which correspond to respective VOBs and are used to manage these VOBs. Put differently, DVD-VR data complying with the DVD-VR standard contains one original PGC (Program Chain) and a plurality of user defined PGCs. The original PGC contains recorded display data and its management information. Each user defined PGC consists of only management information, and refers to the display data contained in the original PGC.

The display data is made up of the plurality of VOBs (Video Objects) described above. Each VOB consists of a plurality of VOBUs (Video Object Units). Each VOBU is normally 0.5-sec long display data, and consists of RDI_PCK, V_PCKs, A_PCKs, and the like, as shown in FIG. 2. The RDI_PCK is present at the head of each VOBU, and describes information associated with that VOBU and the like.

As information associated with aspect ratios in the DVD-VR standard, Aspect Ratio and Application Flag fields in each M VOBI described above, and an Aspect Ratio field in an RDI_PCK in each VOBU are available. The Application Flag field indicates whether the aspect ratio in that VOB is a common one specified by the Aspect Ratio field in M_VOBI or must be determined with reference to each RDI_PCK. The Aspect Ratio field in the RDI_PCK indicates an aspect Ratio in that VOBU.

As can be seen from the aforementioned data structure of the DVD-VR data, video data with different aspect ratios can be mixed in each VOB.

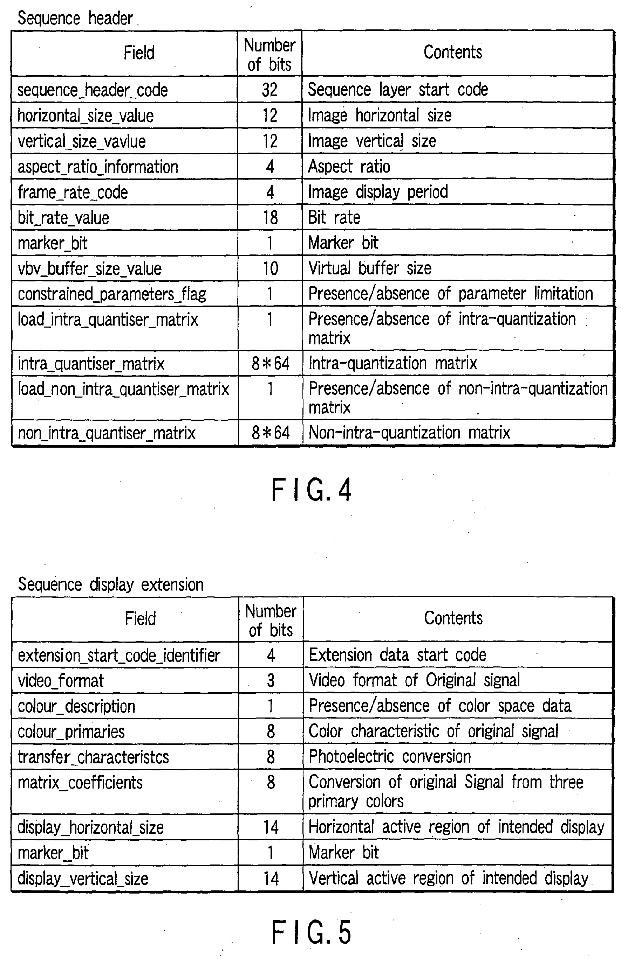

As information associated with aspect ratios in the display data, as shown in FIGS. 4 and 5, an Aspect Ratio Information field in a Sequence Header, and Display Horizontal Size and Display Vertical Size fields in a Sequence Display Extension are available.

The Sequence Header is present in each VOBU. The Sequence display extension is information described after the sequence header, but is not always present.

The Aspect Ratio Information field describes an aspect ratio in a Sequence. The Display Horizontal Size and Display Vertical Size fields specify.the horizontal and vertical sizes of an active area, and are determined by the vertical and horizontal sizes and aspect ratio in the Sequence Header.

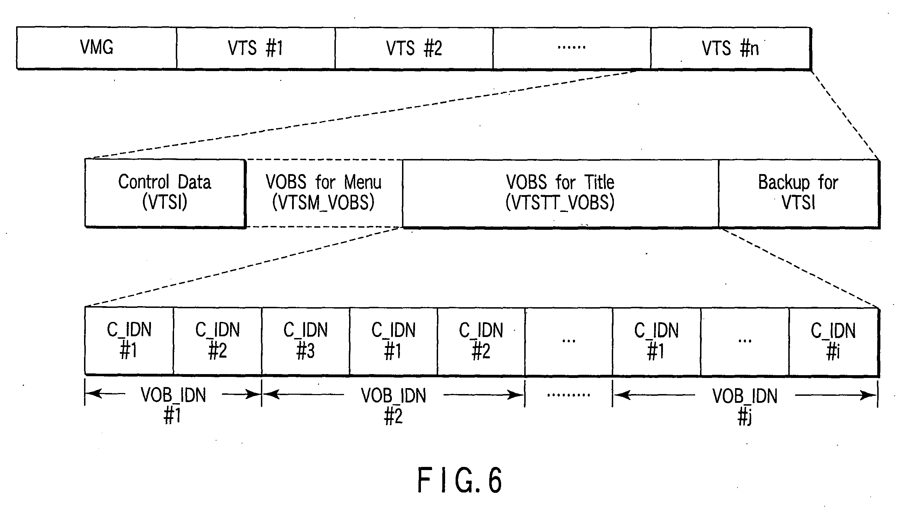

The data structure of DVD-Video data complying with the DVD-Video standard and Aspect Ratio Information in that structure will be described below. FIG. 6 shows the data structure of DVD-Video data complying with the DVD-Video standard. As shown in FIG. 6, DVD-Video data contains one VMG (Video Manager) and a plurality of VTSs (Video Title Sets).

The VMG contains management information and title menu information of the entire data structure. Each VTS consists of VTSI, VTSM_VOBS, VTSTT_VOBS, and VTSI_BUP. The VTSI is management information of a title set, the VTSM_VOBS is display information of a menu of the title set, VTSTT_VOBS is display information of the title set, and the VTSI_BUP is a backup of the VTSI.

Each VOBS (Video Object Set) contains display data and some pieces of management information, and consists of a plurality of VOBs (Video Objects). Each VOB is made up of a plurality of cells. Each cell consists of a plurality of VOBUs (Video Object Units). Each VOBU is normally 0.5-sec long display data, and consists of NV_PCK, V_PCKs, A_PCKs, SP_PCK, and the like, as shown in FIG. 3. The NV_PCK is always present at the head of each VOBU, and describes information associated with that VOBU and the like.

In the DVD-Video standard, information associated with an aspect ratio of video data is present in an Aspect ratio field in VTS_A_ART that describes the attribute of video data in VTSI in management information, and describes that the aspect ratio of an image in VTS is 4 : 3 or 16 : 9. As can be seen from the aforementioned data structure of the DVD-Video data, video data of different aspect ratios cannot mix in VTS in the DVD-Video standard.

As information associated with aspect ratios in the display data, as shown in FIGS. 4 and 5, an Aspect ratio information field in a Sequence Header, and Display Horizontal Size and Display Vertical Size fields in a Sequence Display Extension are available, as in the DVD-VR standard.

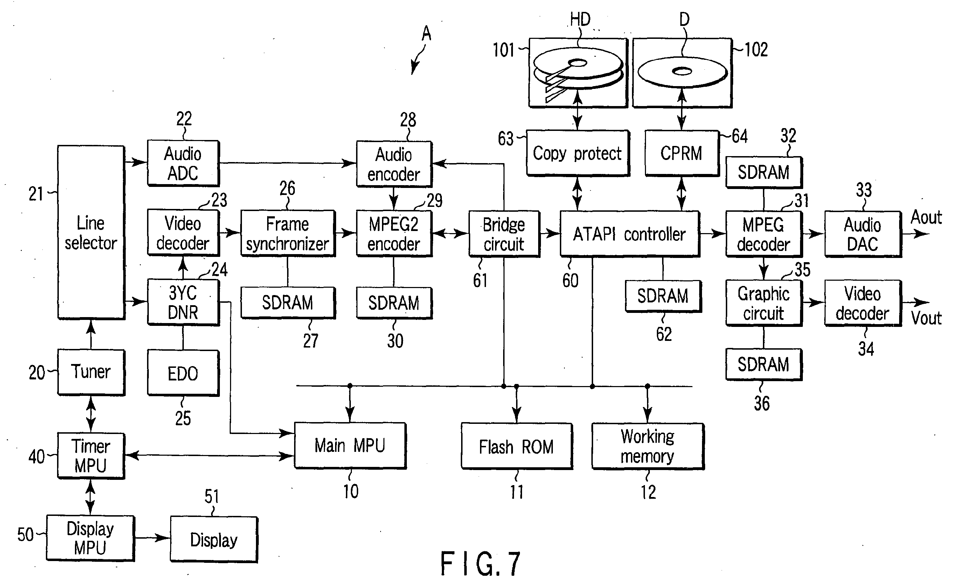

An example of the arrangement of an optical disk recording/playback/editing apparatus which can implement a format conversion process and editing process according to the present invention will be described below with reference to FIG. 7. An optical disk recording/playback/editing apparatus A shown in FIG. 7 comprises a main MPU 10, flash ROM 11, working memory 12, tuner 20, line selector 21, audio AD converter 22, video decoder 23, 3YCDNR 24, EDO 25, frame synchronizer 26, SDRAM 27, audio encoder 28, MPEG2 encoder 29, SDRAM 30, MPEG decoder 31, SDRAM 32, audio DA converter 33, video decoder 34, graphic circuit 35, SDRAM 36, timer MPU 40, display MPU 50, display 51, ATAPI controller 60, bridge circuit 61, SDRAM 62, copy protect 63, and CPRM 64.

The operation of the overall optical disk recording/playback apparatus A is controlled by the main MPU 10. The main MPU 10 is connected to the flash ROM 11 and working memory 12 via a data bus. An input terminal and the tuner 20 are connected to the line selector 21. The tuner 20 is connected to the timer MPU 40. The timer MPU 40 controls the operation of the tuner 20. The timer MPU 40 is also connected to the display MPU 50, which is connected to the display 51. The timer MPU 40 and display MPU 50 control the operation of the display 51.

A signal output from the line selector 21 is input to the audio AD converter 22 and 3YCDNR 24. An audio signal output from the audio AD converter 22 is input to the audio encoder 28. The audio encoder 28 encodes the input audio signal and outputs the encoded audio signal to the MPEG2 encoder 29. The SDRAM 30 is connected to the MPEG2 encoder 29. The EDO 25 is connected to the 3YCDNR 24. A signal output from the 3YCDNR 24 is input to the video decoder 23. A signal output from the video decoder 23 is input to the frame synchronizer 26. The SDRAM 27 is connected to the frame synchronizer 26. A frame signal output from the frame synchronizer 26 is input to the MPEG2 encoder 29.

The MPEG2 encoder 29 encodes an input signal. With this encoding, for example, MPEG stream data is generated. The MPEG stream data generated by the MPEG2 encoder 29 is output to the bridge circuit 61. The bridge circuit 61 outputs the input MPEG stream data to the ATAPI controller 60. The SDRAM 62 is connected to the ATAPI controller 60. The ATAPI controller 60 outputs the MPEG stream data to a disk drive 101 via the copy protect 63 or outputs that data to a disk drive 102 via the CPRM 64.

The disk drive 101 records MPEG stream data on a hard disk HD and reads MPEG stream data recorded on the hard disk HD. The disk drive 102 records MPEG stream data on an optical disk D and reads out MPEG stream data recorded on the optical disk D.

The MPEG stream data read from the disk is input to the MPEG decoder 31 via the ATAPI controller 60. The SDRAM 32 is connected to the MPEG decoder 31. The MPEG decoder 31 decodes the MPEG stream data, and outputs the decoded data to the audio DA converter 33 and graphic circuit 35. The audio DA converter 33 outputs an audio signal contained in the MPEG stream data. The SDRAM 36 is connected to the graphic circuit 35. A graphic signal'output from the graphic circuit 35 is input to the video decoder 34. The video decoder 34 outputs a video signal.

An example of a conversion process of data recorded in the DVD-VR standard into data complying with the DVD-Video standard by changing its aspect ratios will be explained below. For example, a case will be described wherein the disk drive 101 reads data complying with the DVD-VR standard stored in the HDD, the read data is converted into data complying with the DVD-Video standard, and the disk drive 102 records the converted data on the optical disk D.

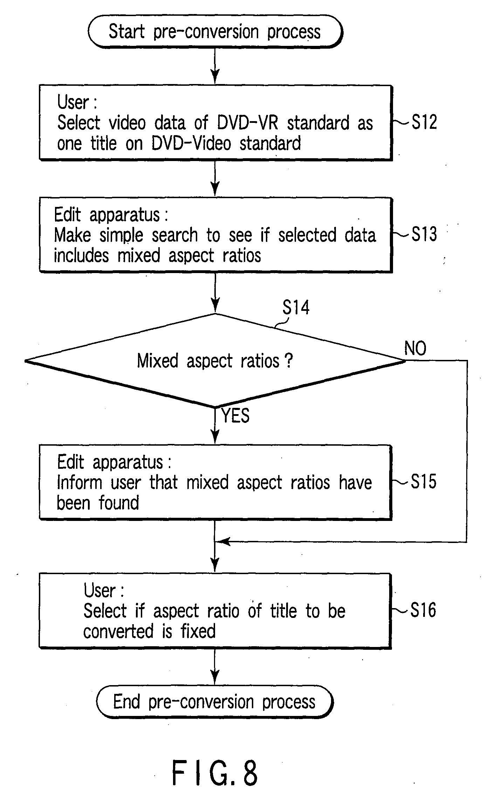

FIG. 8 is a flowchart showing an example of a pre-process before the conversion process starts. Note that the pre-process to be described below is executed under the control of the main MPU 10 of the optical disk recording/playback/editing apparatus shown in FIG. 7. The user selects data on the DVD-VR standard stored in the hard disk HD as one title on the DVD-Video standard (S12). For example, an arbitrary VOB is selected. In this case, if the selected data on the DVD-VR standard has a plurality of aspect ratios (aspect ratio mismatch), the selected data cannot be converted into one title on the DVD-Video standard intact. Therefore, the selected data undergoes a simple check process (S13). If mixed aspect ratios are found (S14, YES), a message that calls the user's attention is displayed on the display 51 under the control of the display MPU 50 (S15). If no mixed aspect ratios are found (ST14, NO), no message is displayed.

The user selects if the aspect ratio of the selected data is that of original video data (no change in aspect ratio), is fixed to 4 : 3 (change in aspect ratio), or is fixed to 16 : 9 (change in aspect ratio) (S16). If the aspect ratio of original video data is adopted, the same process as in the conventional method is done. If mixed aspect ratios are found during conversion, a process for aborting conversion or the like is required to prevent illegal data from being formed.

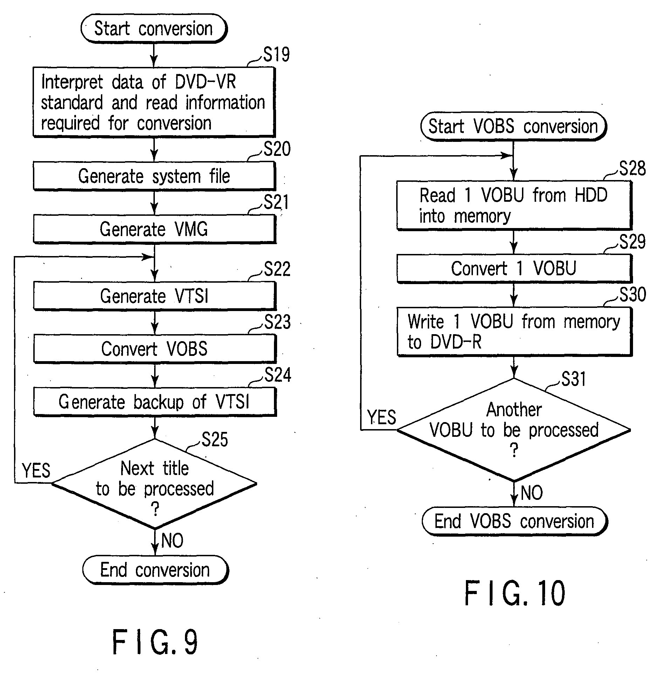

The following explanation will be given under the assumption that 4 : 3 fixed or 16 : 9 fixed is selected. An actual sequence for converting data of the DVD-VR standard into that of the DVD-Video standard will be described below with reference to the flowchart of FIG. 9. Note that the conversion process to be described below is executed under the control of the main MPU 10 of the optical disk recording/playback/editing apparatus shown in FIG. 7. Also, data required for conversion, and various generated data are mapped onto a memory area of the working memory 12. That is, data required for conversion are read out onto the working memory 12, and are rewritten as needed to generate various data under the control of the main MPU 10.

Upon conversion from the DVD-VR standard into the DVD-Video standard, values required for conversion are loaded from management information and display data of the DVD-VR standard in the hard disk HD (S19). A DVD-Video file system and VMG are generated (S20, S21). VTSs are generated in correspondence with the number of titles (S22 to S25). Each VTS consists of VTSI, VOBSs, and a backup of VTSI.

Processes associated with an aspect ratio during the conversion are generation processes of VTSI and VOBSs. The Aspect Ratio field in V_ART in the VTSI describes an aspect ratio described in that title. VOBS conversion is attained by rewriting required values from the VOB of the DVD-VR standard. In this process, values which are included in respective VOBUs and are associated with aspect ratios are rewritten.

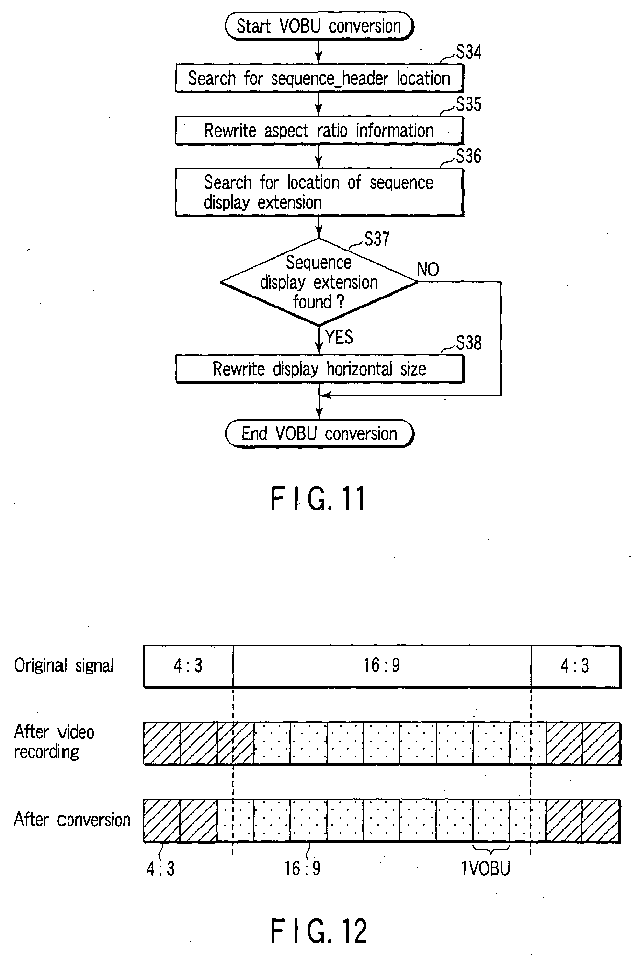

FIG. 10 is a flowchart showing a VOBS conversion sequence. A VOBU to be converted is read out from data of the DVD-VR standard in the hard disk HD, and is loaded onto the working memory 12 via the ATAPI controller 60 (S28). The main MPU 10 rewrites some values in the VOBU loaded in the working memory 12 to obtain data of the DVD-Video standard (S29). After that, the edited VOBU in the working memory 12 is output to the disk drive 102 via the ATAPI controller 60. That is, the edited VOBU is written to the optical disk D (S30). The aforementioned operations are repeated for all VOBUs to be converted (S31).

FIG. 11 is a flowchart showing conversion associated with aspect ratios in the VOBU conversion. An Aspect Ratio Information field in a Sequence Header must be rewritten first. In order to rewrite the aspect ratio information field, VOBU data stored in the working memory 12 is searched for a Sequence Start code (S34). If the Sequence Start code is found, the location of the Aspect Ratio Information field can be detected as its relative location. A value suited to the aspect ratio of the user's choice is overwritten on the Aspect Ratio Information field (S35). If a Sequence Display Extension is present, a Display Horizontal Size field in the Sequence Display Extension must be rewritten. In order to rewrite the Display Horizontal Size field, the Sequence Display Extension must be searched for (S36). If no Sequence Display Extension is found, a rewrite process is skipped since it is not required. If the Sequence Display Extension is found, the location of the Display Horizontal Size field can be detected from a value in that Sequence Display Extension as its relative location. A value suited for an aspect ratio of the user's choice is overwritten on the Display Horizontal Size field (S38). By repeating the aforementioned rewrite process for all VOBUs, the same aspect ratio can be set in all the VOBUs.

The operations and effects of the present invention will be summarized below. Upon converting video data recorded in the DVD-VR standard into data of the DVD-Video standard, if different aspect ratios are present in one title, that title cannot be converted due to limitations of the DVD-Video standard. For example, a method of decoding and playing back data of the DVD-VR standard, and then encoding the played-back data to data of the DVD-Video standard is available. However, with this method, since video and audio data are encoded again after they are decoded, original video data deteriorates.

According to an aspect of the present invention, upon converting data of the DVD-VR standard into data of the DVD-Video standard, if one title includes different aspect ratios, that title is converted while fixing the aspect ratio in the title to a value designated in advance. In the method of fixing the aspect ratio, upon converting data of the DVD-VR standard into that of the DVD-Video standard, the Aspect Ratio Information field in the Sequence Header of each VOBU is rewritten to a value that conforms to the designated aspect ratio. Furthermore, if a Sequence Display Extension is present, the Display Horizontal Size field in that extension is rewritten to a value that conforms to the designated aspect ratio. In this manner, even data of the DVD-VR standard, which includes different aspect ratios in one title, can be converted into that of the DVD-Video standard without degrading original video data.

With the aforementioned method, upon converting video data complying with a given MPEG standard into that complying with another MPEG standard, the aspect ratio can be converted at the same time. In the video data complying with the MPEG standard, some or all aspect ratios can be changed.

FIG. 12 shows an example upon recording a TV program in the DVD-VR standard. A case will be described below wherein an original signal shown in FIG. 12 is recorded. That is, the purpose of this recording process is to record a program with an aspect ratio = 16 : 9, but assume that the recording process starts from a source with an aspect ratio = 4 : 3 immediately before that program. In other words, the aspect ratio of the original signal is switched from 4 : 3 to 16 : 9 at a predetermined timing. For this reason, the switching position of the aspect ratio of the original signal does not often match that after recording. More specifically, upon encoding the original signal, even when the program of the aspect ratio = 16 : 9 has started, if its start is in the middle of a VOBU, the program is recorded to have the aspect ratio = 4 : 3, and the aspect ratio is switched to 16 : 9 from the next VOBU. Therefore, the head part of the program of the aspect ratio = 16 : 9 may be recorded at 4 : 3. In such recorded data, the head part of the program of the aspect ratio = 16 : 9 is converted from 4 : 3 to 16 : 9. This conversion is made according to the flowchart of FIG. 11. That is, when the aspect ratio of a given portion in video data is changed to the designated aspect ratio, the video data of the desired program can be obtained to have the aspect ratio = 16 : 9.

As another method of allowing conversion from data of the DVD-VR standard which has different aspect ratios into that of the DVD-Video standard, a method of fixing the aspect ratio of the data to be converted of the DVD-VR standard is available. Such a method can be implemented by executing conversion according to the flowchart of FIG. 11 for VOBUs to be converted.

## Claims

1. A video data conversion apparatus **characterized by** comprising:
conversion unit (10) configured to convert video data which complies with a predetermined standard and has nonuniform aspect ratios into video data having a uniform aspect ratio by rewriting data which is contained in the video data having the nonuniform aspect ratios and designates aspect ratios; and
output unit (102) configured to output the video data converted by the conversion unit.

2. An apparatus according to claim 1, **characterized in that** the conversion unit converts DVD-VR data which complies with a DVD-VR standard and has nonuniform aspect ratios into DVD-VR data having a uniform aspect ratio by rewriting data which is contained in the DVD-VR data having nonuniform aspect ratios and designates aspect ratios.

3. An apparatus according to claim 2, **characterized in that** the DVD-VR data contains video object data obtained by encoding video and audio data, and management data which corresponds to the video object data and is used to manage the video object data,
the video object data contains a plurality of video object unit data,
each video object unit data contains sequence header data,
the sequence header data contains aspect data that designates an aspect ratio, and
the conversion unit converts a group of video object data unit data having nonuniform aspect ratios into a group of video object unit data having a uniform aspect ratio by rewriting the aspect data as needed.

4. An apparatus according to claim 3, **characterized in that** the video object unit data contains sequence display extension data,
the sequence display extension data contains display horizontal size data, and
the conversion unit converts a group of video object data unit data having nonuniform aspect ratios into a group of video object unit data having a uniform aspect ratio by rewriting the display horizontal size data as needed.

5. An apparatus according to claim 1, **characterized in that** the conversion unit converts DVD-VR data which complies with a DVD-VR standard and has nonuniform aspect ratios into DVD-VR data having a uniform aspect ratio by rewriting data which is contained in the DVD-VR data having nonuniform aspect ratios and designates aspect ratios, and then converts the DVD-VR data having a uniform aspect ratio into DVD-Video data.

6. An apparatus according to claim 5, **characterized in that** the DVD-VR data contains video object data obtained by encoding video and audio data, and management data which corresponds to the video object data and is used to manage the video object data,
the video object data contains a plurality of video object unit data,
each video object unit data contains sequence header data,
the sequence header data contains aspect data that designates an aspect ratio, and
the conversion unit converts a group of video object data unit data having nonuniform aspect ratios into a group of video object unit data having a uniform aspect ratio by rewriting the aspect data as needed.

7. An apparatus according to claim 6, **characterized in that** the video object unit data contains sequence display extension data,
the sequence display extension data contains display horizontal size data, and
the conversion unit converts a group of video object data unit data having nonuniform aspect ratios into a group of video object unit data having a uniform aspect ratio by rewriting the display horizontal size data as needed.

8. A video data conversion method **characterized by** comprising:
converting (S35) video data which complies with a predetermined standard and has nonuniform aspect ratios into video data having a uniform aspect ratio by rewriting data which is contained in the video data having the nonuniform aspect ratios and designates aspect ratios.

9. A method according to claim 8, **characterized in that** the conversion process converts DVD-VR data which complies with a DVD-VR standard and has nonuniform aspect ratios into DVD-VR data having a uniform aspect ratio by rewriting data which is contained in the DVD-VR data having nonuniform aspect ratios and designates aspect ratios.

10. A method according to claim 9, **characterized in that** the DVD-VR data contains video object data obtained by encoding video and audio data, and management data which corresponds to the video object data and is used to manage the video object data,
the video object data contains a plurality of video object unit data,
each video object unit data contains sequence header data,
the sequence header data contains aspect data that designates an aspect ratio, and
the conversion process converts a group of video object data unit data having nonuniform aspect ratios into a group of video object unit data having a uniform aspect ratio by rewriting the aspect data as needed.

11. A method according to claim 10, **characterized in that** the video object unit data contains sequence display extension data,
the sequence display extension data contains display horizontal size data, and
the conversion process converts a group of video object data unit data having nonuniform aspect ratios into a group of video object unit data having a uniform aspect ratio by rewriting the display horizontal size data as needed.

12. A method according to claim 8, **characterized in that** the conversion process converts DVD-VR data which complies with a DVD-VR standard and has nonuniform aspect ratios into DVD-VR data having a uniform aspect ratio by rewriting data which is contained in the DVD-VR data having nonuniform aspect ratios and designates aspect ratios, and then converts the DVD-VR data having a uniform aspect ratio into DVD-Video data.

13. A method according to claim 12, **characterized in that** the DVD-VR data contains video object data obtained by encoding video and audio data, and management data which corresponds to the video object data and is used to manage the video object data,
the video object data contains a plurality of video object unit data,
each video object unit data contains sequence header data,
the sequence header data contains aspect data that designates an aspect ratio, and
the conversion process converts a group of video object data unit data having nonuniform aspect ratios into a group of video object unit data having a uniform aspect ratio by rewriting the aspect data as needed.

14. A method according to claim 13, **characterized in that** the video object unit data contains sequence display extension data,
the sequence display extension data contains display horizontal size data, and
the conversion process converts a group of video object data unit data having nonuniform aspect ratios into a group of video object unit data having a uniform aspect ratio by rewriting the display horizontal size data as needed.
